# EUROPÄISCHE PATENTSCHRIFT

(11) **EP 1 567 733 B1**
(45) Veröffentlichungstag und Bekanntmachung des Hinweises auf die Patenterteilung: **10.02.2010**
(21) Anmeldenummer: 03812172.9
(22) Anmeldetag: 03.12.2003
(51) Int. Cl.: E04F 13/08, E04G 23/02, F16B 13/14

(54) **VORRICHTUNG UND VERFAHREN ZUR BEFESTIGUNG VON FASSADENPLATTEN**
DEVICE AND METHOD FOR FASTENING FAÇADE PLATES
DISPOSITIF ET PROCEDE POUR FIXER DES PLAQUES DE FAÇADE

(30) Priorität: 03.12.2002 DE 10256637; 10.01.2003 DE 10300854
(43) Veröffentlichungstag der Anmeldung: 31.08.2005
(73) Patentinhaber: Weise + Strattner GmbH, 90614 Ammerndorf (DE); Viezens, Ludwig, 90542 Eckental (DE)
(72) Erfinder: VIEZENS, Ludwig, 90542 Eckental (DE); STRATTNER, Erwin, 90614 Ammerndorf (DE); WEISE, Klaus, Dieter, 90614 Ammerndorf (DE)
(74) Vertreter: Gassner, Wolfgang
(86) Internationale Anmeldenummer: PCT/EP2003/013654
(87) Internationale Veröffentlichungsnummer: WO 2004/051027

(56) Entgegenhaltungen:
- EP-A- 0 014 728
- EP-A- 0 635 646
- EP-A- 0 863 353
- DE-A- 3 815 551
- DE-C- 3 900 671
- GB-A- 2 263 958
- US-A- 4 096 672
- US-A- 4 883 396
- US-A- 5 636 486

## Beschreibung

Die Erfindung betrifft eine Vorrichtung und ein Verfahren zur Befestigung von Fassadenplatten (siehe z.B. EP-A-635 646).

Die Erfindung betrifft insbesondere das Gebiet der Restaurierung von mit Fassadenplatten versehenen Gebäuden. Fassadenplatten sind üblicherweise mit Metallankern an einer Tragwand eines Gebäudes befestigt. Die Metallanker tragen eine Vertikallast der Fassadenplatte in die Tragwand ab. Außerdem halten die Metallanker die mit Abstand zur Tragwand angebrachte Fassadenplatte in horizontaler Richtung.

Im Laufe der Zeit kann es durch thermisch induzierte Spannungen und aggressive Abgase in der Luft zu einem Ausbrechen der Metallanker kommen. Infolgedessen kann es dazu kommen, dass Fassadenplatten sich lösen und vom Gebäude herabfallen. Das stellt eine erhebliche Gefährdung von Passanten dar. Fassaden mit schadhaften Fassadenankern sind umgehend zu renovieren bzw. zu restaurieren.

Nach dem Stand der Technik ist es dazu erforderlich, das Gebäude entweder mit neuen Fassadenplatten zu verkleiden oder die alten Fassadenplatten abzunehmen und die Fassade unter Verwendung neuer Anker wieder aufzubauen. Beide Sanierungsmaßnahmen sind äußerst kosten- und zeitaufwändig.

Daneben ist es auch noch bekannt, zur Sicherung lockerer Fassadenplatten eine Durchgriffsbohrung durch die Fassadenplatte vorzusehen und diese mit einer Schraube an der Tragwand zu sichern. Damit wird zwar ein Herabfallen der Fassadenplatte verhindert, die Fassadenplatte wird jedoch in horizontaler Richtung nicht festgehalten. Insbesondere bei einem Sturm wackeln solche Fassadenplatten. Dadurch bedingt, kann es zu einem Bruch und zum Herabfallen der Fassadenplatte kommen.

Aufgabe der Erfindung ist es, die Nachteile nach dem Stand der Technik zu beseitigen. Es sollen insbesondere eine Vorrichtung und ein Verfahren angegeben werden, mit denen auf einfache und kostengünstige Weise eine dauerhafte Sanierung von Fassaden möglich ist.

Diese Aufgabe wird durch die Merkmale der Ansprüche 1 und 12 gelöst. Zweckmäßige Ausgestaltungen ergeben sich aus den Merkmalen der Ansprüche 2 bis 11 und 13 bis 16.

Mit der vorgeschlagenen Vorrichtung gelingt es auf einfache Weise Fassaden zu sanieren. Zur erneuten Befestigung der Fassadenplatten ist es nicht erforderlich, diese abzunehmen. Sie können an Ort und Stelle erneut befestigt werden. Dabei gewährleistet die vorgeschlagene Vorrichtung sowohl einen vertikalen Lastabtrag als auch eine horizontale Fixierung der Fassadenplatten.

Nachfolgend wird anhand der Zeichnung ein Ausführungsbeispiel der Erfindung näher erläutert. Es zeigen:
- Fig. 1: eine erste Querschnittsansicht durch eine Vorrich- tung,
- Fig. 2: eine Querschnittsansicht gemäß der Schnittlinie C - C in Fig. 1,
- Fig. 3: eine Querschnittsansicht gemäß der Schnittlinie B - B in Fig. 1,
- Fig. 4: eine Querschnittsansicht gemäß der Schnittlinie A - A in Fig. 1,
- Fig. 5: eine zweite Querschnittsansicht der Vorrichtung, wobei ein Ringraum verfüllt ist und
- Fig. 6: eine Querschnittsansicht gemäß der Schnittlinie C - C in Fig. 5.

In den Figuren ist mit 1 eine Tragwand eines Gebäudes und mit 2 eine davon mit einem Abstand gehaltene Fassadenplatte bezeichnet. Ein erfindungsgemäßer Anker zur Befestigung der Fassadenplatte 2 weist ein, zweckmäßigerweise aus Kunststoff hergestelltes, Halteelement 3 auf, von dem sich eine Gewindestange 4 in eine in die Tragwand eingebrachte Bohrung 5 erstreckt. Ein erstes Ende E1 des Halteelements 3 befindet sich in der Nähe der Gewindestange 4. Das entfernt von der Gewindestange 4 befindliche zweite Ende ist mit E2 bezeichnet. Von einem im Halteelement 3 gebildeten Ringraum 6 erstreckt sich zum zweiten Ende E2 ein Kanal 7. Eine am zweiten Ende E2 vorgesehene Öffnung des Kanals 7 ist mit einem Rückschlagventil 8 verschlossen. Am ersten Ende E1 des Halteelements 3 befindet sich ein Flansch 9. Ein Silikonschlauch 10 umgibt das Halteelement 3. Der Silikonschlauch 10 ist mit einem Schlauchbinder 11 am Flansch 9 befestigt. Das Halteelement 3 ist an seinem Außenumfang in Richtung der Gewindestange 4 konisch sich verjüngend ausgebildet. Es liegt unter Vermittlung des Silikonschlauchs 10 formschlüssig an einer die Fassadenplatte 2 durchgreifenden Durchgriffsbohrung 12 an. Ein mit dem Bezugszeichen 18 bezeichneter O-Ring ist in der Nähe des zweiten Endes E2 des Halteelements 3 zwischen dem Halteelement 3 und dem Silikonschlauch 10 vorgesehen.

Die Gewindestange 4 greift in eine Siebhülse 13 ein, die mittels eines Verbundmörtels 14 in der Bohrung 5 fixiert ist.

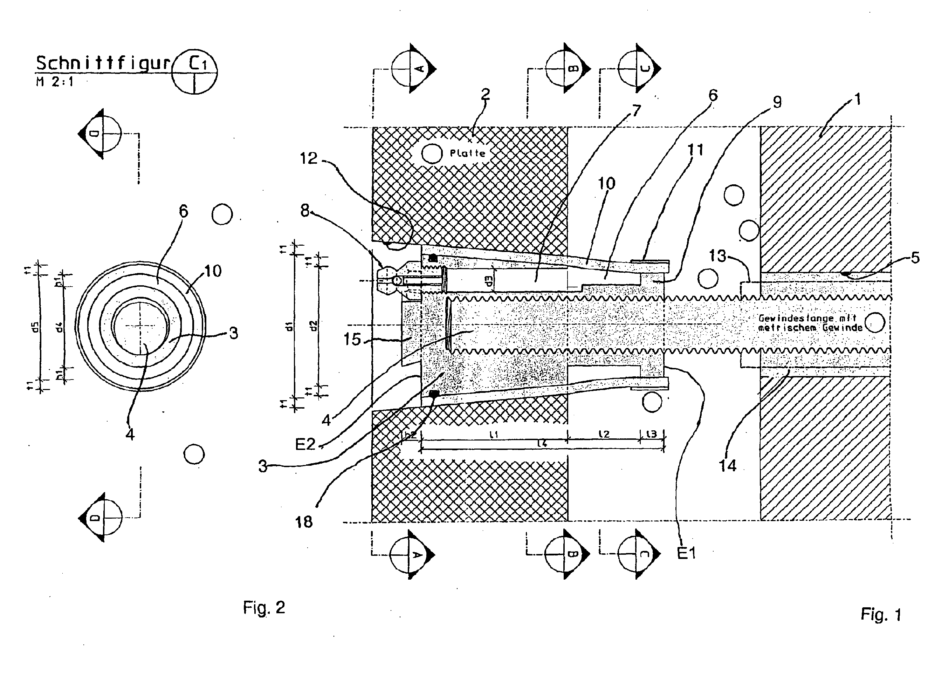

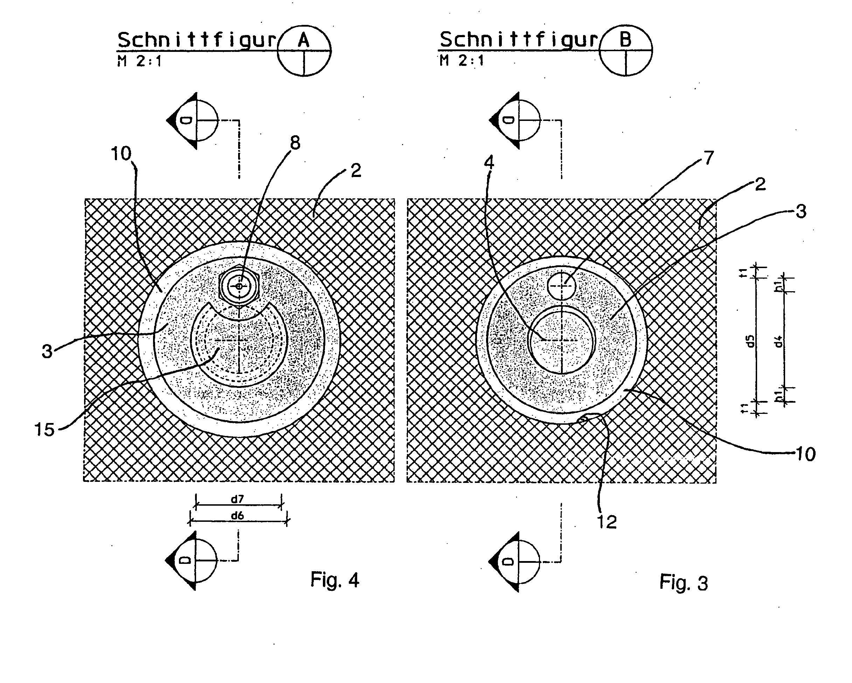

Aus der in Fig. 2 gezeigten Querschnittsansicht ist nochmals deutlich die Ausbildung des von dem Silikonschlauch 10 umgebenen Ringraums 6 ersichtlich. Die Querschnittsansicht in Fig. 3 zeigt den konischen Abschnitt des Halteelements 3, welcher unter Zwischenschaltung des Silikonschlauchs 10 formschlüssig an der Wand der ebenfalls konisch ausgebildeten Durchgriffsbohrung 12 anliegt. Fig. 4 zeigt eine Querschnittsansicht bzw. eine Draufsicht auf das zweite Ende E2 des in der Durchgriffsbohrung 12 aufgenommenen Ankers. Eine am zweiten Ende E2 vorgesehene hinterschnittene Struktur 15 ist in einstückiger Ausbildung mit dem Halteelement 3 hergestellt.

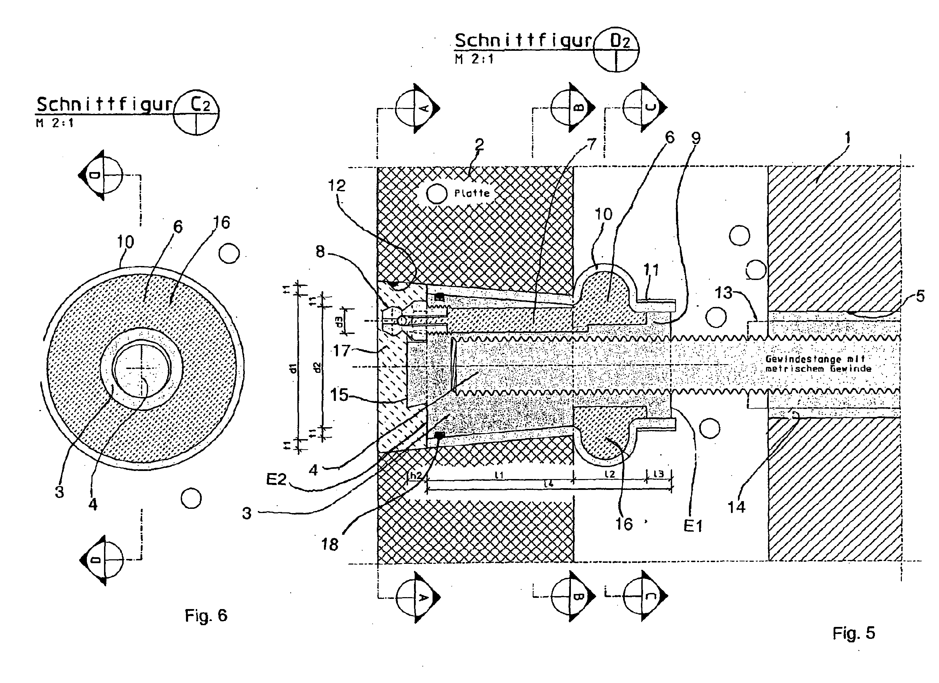

Fig. 5 zeigt den Anker gemäß Fig. 1, wobei hier der Kanal 7 und der Ringraum 6 mit einem zähelastisch aushärtenden Harz 16 verfüllt sind. Infolge der Elastizität des Silikonschlauchs 10 und einem Einspritzen der zähelastisch aushärtenden Masse, z. B. Zwei-Komponenten-Epoxydharz, bildet sich im Bereich des Ringraums 6 eine Wölbung aus, die das Halteelement 3 gegen Verschieben in horizontaler Richtung sichert. Der O-Ring 18 verhindert sicher ein unerwünschtes Austreten des Zwei-Komponenten-Epoxydharzes zwischen dem Halteelement 3 und dem Silikonschlauch 10.

In Fig. 6 ist eine Querschnittsansicht gemäß der Schnittlinie C - C gezeigt. Daraus ist nochmals der mit der zähelastischen Masse 16 verfüllte Ringraum 6 klar erkennbar.

Zum Verankern der Fassadenplatte 2 wird zweckmäßigerweise das folgende Arbeitsverfahren durchgeführt:

Zunächst wird durch die Fassadenplatte 2 mit einem Bohrer eine Durchgangsbohrung und mit demselben Bohrer unmittelbar danach die Bohrung 5 hergestellt. Anschließend wird die Durchgangsbohrung konisch aufgeweitet, so dass sich der Konus zur Tragwand 1 hin verjüngt. Es wird dann in die Bohrung 5 ein Verbundmörtel 14 oder ein Kunstharz eingespritzt und eine Siebhülse bzw. ein Gitterdübel eingesteckt. Anschließend wird der Anker mit der Gewindestange 4 in die Siebhülse 5 eingesteckt, bis das Halteelement 3 bzw. der das Halteelement umgebende Silikonschlauch 10 formschlüssig an der konischen Durchgangsbohrung 12 anliegt. Nach dem Aushärten des Verbundmörtels 14 wird durch Drehen des Halteelements 3 im Uhrzeigersinn eine geringfügige Verspannung des Halteelements 3 mit der Fassadenplatte 2 bewirkt. Eine solche Verspannung ist selbstverständlich nur dann herstellbar, wenn die Fassadenplatte 2 noch mit den alten Ankern (hier nicht gezeigt) gegen die Tragwand 1 auf Abstand gehalten wird. Auf das Verspannen des Halteelements 3 durch Verdrehen im Uhrzeigersinn kann auch verzichtet werden, sofern der O-Ring 18 vorgesehen ist.

Nach dem Verspannen des Halteelements 3 mit der Fassadenplatte 2 wird eine vorgegebene Menge an Zwei-Komponenten-Epoxydharz durch das Rückschlagventil 8 in den Ringraum 6 gedrückt. Infolgedessen wölbt sich die den Ringraum umgebende aus dem Silikonschlauch 10 gebildete elastische Wand nach außen. Sofern der O-Ring 18 vorgesehen ist, wird auch bei einem geringfügig verkippten Einsetzen des Halteelements 3 in die Durchgangsbohrung 12 stets eine zuverlässige Dichtwirkung erreicht. Ein Austritt des Zwei-Komponenten-Epoxydharzes im Bereich des zweiten Endes E2 wird sicher vermieden. Nach dem Aushärten der zähelastisch aushärtenden Masse 16 sitzt das Halteelement 3 im Wesentlichen unverschiebbar in der Durchgangsbohrung 12. Es ist infolge der elastischen Eigenschaften des Silikonschlauchs 10 elastisch in der Durchgangsbohrung 12 gehalten. Der vorgeschlagene Anker hält die Fassadenplatte 2 in horizontaler Richtung. Gleichzeitig wird auch ein vertikaler Lastabtrag über die Tragwand 1 erreicht.

Schließlich wird eine verbleibende Öffnung der Durchgangsbohrung 12 z. B. mit einer bindemittelhaltigen Füllmasse 17 ausgefüllt. Bei dem Bindemittel kann es sich Zement oder um einen Kunststoff handeln. Die hinterschnittene Struktur 15 dient einem innigen Verbund des Halteelements 3 mit der Füllmasse 17. Wegen der hinterschnittenen Struktur 15 kann die ausgehärtete Füllmasse 17 sich nicht vom Halteelement 3 lösen.

Nach einer Ausgestaltung kann es auch sein, dass am zweiten Ende E2 eine axiale Ausnehmung bzw. ein Sackloch, vorgesehen ist. Ein solches Sackloch dient der Befestigung eines Deckels zum Abdecken der durch die Durchgangsbohrung 12 gebildeten Öffnung. Ein solcher Deckel, der beispielsweise aus Edelstahl hergestellt sein kann, wird vorzugsweise bei Fassadenplatten 2 benutzt, die aus Glas hergestellt sind.

Der vorgeschlagene Anker ist insbesondere deshalb vorteilhaft, weil damit auch thermisch bedingte Ausnehmungen der Fassadenplatten 2 kompensiert werden können. Die Kompensation wird durch die elastischen Eigenschaften des das Halteelement 3 umgehenden Silikonschlauchs 10 erreicht. Unerwünschte Zwängungen der Fassadenplatten 2 können so sicher vermieden werden.

### Bezugszeichenliste

- 1: Tragwand
- 2: Fassadenplatte
- 3: Halteelement
- 4: Gewindestange
- 5: Bohrung
- 6: Ringraum
- 7: Kanal
- 8: Rückschlagventil
- 9: Flansch
- 10: Silikonschlauch
- 11: Schlauchbinder
- 12: Durchgangsbohrung
- 13: Siebhülse
- 14: Verbundmörtel
- 15: hinterschnittene Struktur
- 16: zähelastisch aushärtende Masse
- 17: Füllmasse
- 18: O-Ring

- E1: erstes Ende
- E2: zweites Ende

## Patentansprüche

1. Vorrichtung zur Befestigung von Fassadenplatten (2) mit einer sich von einem Halteelement (3) erstreckenden Gewindestange (4),
wobei das Halteelement (3) an seinem nahe bei der Gewindestange (4) befindlichen ersten Ende (E1) einen Ringraum (6) mit einer aus einem elastischen Material (10) hergestellten Wand aufweist,
wobei ein Kanal (7) vom Ringraum (6) sich zu einem entfernt von der Gewindestange (4) befindlichen zweiten Ende (E2) erstreckt,
und wobei am zweiten Ende (E2) ein Ventil (8) vorgesehen ist, mit dem der Kanal (7) verschließbar ist.

2. Vorrichtung nach Anspruch 1, wobei das Halteelement (3) am zweiten Ende (E2) einen größeren Durchmesser als am ersten Ende (E1) aufweist.

3. Vorrichtung nach einem der vorhergehenden Ansprüche, wobei das Halteelement (3) sich vom zweiten Ende (E2) zum ersten Ende (E1) hin konisch verjüngt.

4. Vorrichtung nach einem der vorhergehenden Ansprüche, wobei das Halteelement (3) einstückig aus Kunststoff hergestellt ist.

5. Vorrichtung nach einem der vorhergehenden Ansprüche, wobei der Ringraum (6) eine am ersten Ende (E1) gebildete radial umlaufende Ausnehmung aufweist.

6. Vorrichtung nach einem der vorhergehenden Ansprüche, wobei auf dem Halteelement (3) ein elastischer Schlauch (10) aufgenommen ist.

7. Vorrichtung nach einem der vorhergehenden Ansprüche, wobei der, vorzugsweise aus Silikon hergestellte, elastische Schlauch (10) die Wand des Ringraums (6) bildet.

8. Vorrichtung nach einem der vorhergehenden Ansprüche, wobei der elastische Schlauch (10) sich im Wesentlichen über die gesamte axiale Länge des Halteelements (3) erstreckt.

9. Vorrichtung nach einem der vorhergehenden Ansprüche, wobei der elastische Schlauch (10) an einem am ersten Ende (E1) des Halteelements (3) befindlichen Flansch (9) mittels eines Spannelements (11), vorzugsweise einem Schlauchbinder, befestigt ist.

10. Vorrichtung nach einem der vorhergehenden Ansprüche, wobei am zweiten Ende (E2) ein hinterschnitten ausgebildeter Vorsprung (15) vorgesehen ist.

11. Vorrichtung nach einem der vorhergehenden Ansprüche, wobei am zweiten Ende (E2) eine zentrische Ausnehmung vorgesehen ist.

12. Verfahren zur Befestigung von Fassadenplatten (2) unter Verwendung der Vorrichtung nach einem der vorhergehenden Ansprüche, mit folgenden Schritten:
a) Herstellen einer die Fassadenplatte (2) durchgreifenden und in eine Tragwand reichenden Bohrung (12, 5),
b) Aufweiten des Radius der die Fassadenplatte (2) durchgreifenden Durchgriffsbohrung (12) in der Nähe einer Sichtseite der Fassadenplatte (2),
c) Einbringen eines Dübels (13) in die in die Tragwand (1) eingebrachte Bohrung (5) unter Verwendung einer aushärtenden Masse (14),
d) Einstecken der Gewindestange (4) in den Dübel (13), so dass das Halteelement (3) am Innenumfang der Durchgriffsbohrung (12) anliegt,
e) Einschrauben der Vorrichtung und Verspannen mit der Fassadenplatte (2),
f) Einspritzen einer zähelastisch aushärtenden Masse (16) durch das Ventil (8), so dass die den Ringraum (6) umgebende Wand (10) sich aufweitet und damit das Halteelement (3) in der Durchgriffsbohrung (12) gehalten wird.

13. Verfahren nach Anspruch 12, wobei der Radius der Durchgriffsbohrung (12) konisch aufgeweitet wird.

14. Verfahren nach einem der Ansprüche 12 oder 13, wobei als zähelastisch aushärtende Masse (16) ein Epoxydharz verwendet wird.

15. Verfahren nach einem der Ansprüche 12 bis 14, wobei eine an der Sichtseite der Fassadenplatte (2) verbleibenden Öffnung der Durchgriffsbohrung (12) nach dem Aushärten der zähelastisch aushärtenden Masse (16) verschlossen wird.

16. Verfahren nach einem der Ansprüche 12 bis 15, wobei die Öffnung mit einem Deckel oder einer bindemittelhaltigen Masse (17) verschlossen wird.

## Claims

1. Device for fastening of façade plates (2) comprising a threaded bar (4) extending from a holding element (3),
wherein, on its first end (E1) located near the threaded bar (4), the holding element (3) has an annular space (6) with a wall made of an elastic material (10),
wherein a channel (7) extends from the annular space (6) to a second end (E2) at a distance from the threaded bar (4),
and wherein a valve (8) is provided on the second end (E2) with which valve the channel (7) can be closed.

2. Device as defined in claim 1, wherein the holding element (3) has a larger diameter on the second end (E2) than on the first end (E1).

3. Device as defined in one of the preceding claims, wherein the holding element (3) tapers conically from the second end (E2) to the first end (E1).

4. Device as defined in one of the preceding claims, wherein the holding element (3) is one-piece and made of plastic.

5. Device as defined in one of the preceding claims, wherein the annular space (6) has a radially surrounding recess on the first end (E1).

6. Device as defined in one of the preceding claims, wherein an elastic tube (10) is located on the holding element (3).

7. Device as defined in one of the preceding claims, wherein the elastic tube (10), preferably made of silicone, forms the wall of the annular space (6).

8. Device as defined in one of the preceding claims, wherein the elastic tube (10) extends essentially over the entire axial length of the holding element (3).

9. Device as defined in one of the preceding claims, wherein the elastic tube (10) is fastened on a flange (9) located on the first end (E1) of the holding element (3) via a mounting element (11), preferably a tube binder.

10. Device as defined in one of the preceding claims, wherein an undercut projection (15) is provided on the second end (E2).

11. Device as defined in one of the preceding claims, wherein a centrical recess is provided on the second end (E2).

12. Method of fastening façade plates (2) using the device as defined in one of the preceding claims, comprising the following steps:
a) making a bored hole (12, 5) extending into a supporting wall and reaching through the façade plate (2).
b) widening the radius of the reach-through bored hole (12) reaching through the façade plate (2) in the vicinity of a visible side of the façade plate (2),
c) installing a dowel (13) in the bored hole (5) made in the supporting wall (1) using a hardenable mass (14),
d) inserting the threaded bar (4) into the dowel (13) so that the holding element (3) lies on the inner circumference of the reach-through bored hole (12),
e) screwing in the device and mount to the façade plate (2),
f) injecting a viscoplastic hardenable mass (16) via the valve (8) so that the wall (10) surrounding the annular space (6) is widened and the holding element (3) is thereby held in the reach-through bored hole (12).

13. Method as defined in claim 12, wherein the radius of the reach-through bored hole (12) is conically widened.

14. Method as defined in one of the claims 12 or 13, wherein an epoxy resin is used as the viscoplastic hardenable mass (16).

15. Method as defined in one of the claims 12 to 14, wherein an opening of the reach-through bored hole (12) remaining on the visible side of the façade plate (2) is closed after the hardening of the viscoplastic hardenable mass (16).

16. Method as defined in one of the claims 12 to 15, wherein the opening is closed with a cover or a mass (17) containing a binding agent.

## Revendications

1. Dispositif pour la fixation de panneaux de façade (2) avec une tige filetée (4) s'avançant à partir d'un élément de maintien (3),
où l'élément de maintien (3) présente à sa première extrémité (E1) qui se trouve à proximité de la tige filetée (4) un espace annulaire (6) avec une paroi réalisée en un matériau élastique (10),
où un canal (7) s'avance à partir de l'espace annulaire (6) vers une deuxième extrémité (E2) qui est éloignée de la tige filetée (4),
et où est prévu à la deuxième extrémité (E2) un clapet (8) permettant de fermer le canal (7).

2. Dispositif selon la revendication 1, où l'élément de maintien (3) présente à la deuxième extrémité (E2) un plus grand diamètre qu'à la première extrémité (E1).

3. Dispositif selon l'une des revendications précédentes, où l'élément de maintien (3) converge de manière conique de la deuxième extrémité (E2) vers la première extrémité (E1).

4. Dispositif selon l'une des revendications précédentes, où l'élément de maintien (3) est réalisé d'une pièce en matière plastique.

5. Dispositif selon l'une des revendications précédentes, où l'espace annulaire (6) présente un évidement circonférentiel réalisé radialement sur la première extrémité (E1).

6. Dispositif selon l'une des revendications précédentes, où un tuyau élastique (10) est positionné sur l'élément de maintien (3).

7. Dispositif selon l'une des revendications précédentes, où le tuyau (10) élastique, réalisé de préférence en silicone, constitue la paroi de l'espace annulaire (6).

8. Dispositif selon l'une des revendications précédentes, où le tuyau élastique (10) s'étend essentiellement par-dessus toute la longueur axiale de l'élément de maintien (3).

9. Dispositif selon l'une des revendications précédentes, où le tuyau élastique (10) est fixé à une bride (9) placée sur la première extrémité (E1) de l'élément de maintien (3) au moyen d'un élément de serrage (11), de préférence d'un collier.

10. Dispositif selon l'une des revendications précédentes, où une partie en saillie (15) réalisée en contre-dépouille sur la deuxième extrémité (E2) est prévue.

11. Dispositif selon l'une des revendications précédentes, où un évidement centré est prévu sur la deuxième extrémité (E2).

12. Procédé pour la fixation de panneaux de façade (2) en utilisant le dispositif selon l'une des revendications précédentes, conformément aux opérations suivantes :
a) réalisation d'un trou traversant le panneau de façade (2) et allant dans une paroi porteuse (12, 5),
b) élargissement du rayon du trou de passage (12) traversant le panneau de façade (2) à proximité d'un côté visible du panneau de façade (2),
c) insertion d'une cheville (13) dans le trou (5) réalisé dans la paroi porteuse (1) en utilisant une masse durcissante (14),
d) introduction de la tige filetée (4) dans la cheville (13) de façon que l'élément de maintien (3) soit appliqué sur le périmètre intérieur du trou de passage (12),
e) vissage du dispositif et haubanage avec le panneau de façade (2),
f) injection d'une masse résiliente durcissante (16) par le clapet (8) de façon que la paroi (10) entourant l'espace annulaire (6) s'élargisse et pour que l'élément de maintien (3) soit maintenu dans le trou de passage (12).

13. Procédé selon la revendication 12, où le rayon du trou de passage (12) est élargi de manière conique.

14. Procédé selon l'une des revendications 12 ou 13, où une résine époxy est utilisée comme masse résiliente durcissante (16).

15. Procédé selon l'une des revendications 12 à 14, où une ouverture du trou de passage (12) restant sur le côté visible du panneau de façade (2) se ferme après le durcissement de la masse résiliente durcissante (16).

16. Procédé selon l'une des revendications 12 à 15, où l'ouverture est fermée avec un couvercle ou une masse contenant un liant (17).
